# EUROPEAN PATENT SPECIFICATION

(11) **EP 3 383 025 B1**
(45) Date of publication and mention of the grant of the patent: **24.05.2023**
(21) Application number: 17164227.5
(22) Date of filing: 31.03.2017
(51) Int. Cl.: H04N 5/349, H04N 5/232, H04N 5/225

(54) **DEVICE AND METHOD FOR GENERATING SUPER RESOLUTION PHOTOS**
VORRICHTUNG UND VERFAHREN ZUR ERZEUGUNG SUPERAUFLÖSENDER FOTOS
DISPOSITIF ET PROCÉDÉ DE PRODUCTION DE PHOTOS SUPER RÉSOLUTION

(43) Date of publication of application: 03.10.2018
(73) Proprietor: Vestel Elektronik Sanayi ve Ticaret A.S., 45030 Manisa (TR)
(72) Inventor: KIRISKEN, Barbaros, 45030 Manisa (TR)
(74) Representative: Kehl, Ascherl, Liebhoff & Ettmayr Patentanwälte Partnerschaft mbB

(56) References cited:
- US-A1- 2011 226 955
- US-A1- 2014 125 825
- US-A1- 2016 352 992
- US-B1- 9 458 963

## Description

The present invention refers according to claim 1 to a device for generating one super-resolution photo by capturing multiple photos and merging photo information of the multiple captured photos, according to claim 6 to a selfie stick and according to claim 7 to a method for generating one super-resolution photo by capturing multiple photos and merging photo information of the multiple photos

### Background of the invention

Document US 9467666 B1 discloses a camera of a multifunction device comprising: a first image sensor attached to a first substrate; a second image sensor attached to a second substrate; a lens system; a color-splitting component along an optical path between the lens system and the image sensors, wherein the color-splitting component separates the light into a plurality of respective portions of visible incoming light arriving at a camera module; a processor; a memory containing program instructions, wherein the instructions are computer-executable to cause the processor to perform: receiving at a plurality of digital image sensor arrays a plurality of respective portions of visible incoming light arriving at a camera module, wherein each respective portion of the plurality of respective portions comprises light of a wavelength range different from a wavelength range of another respective portion; and calculating positions of a plurality of corresponding apparent features in each of the respective portions of visible light; identifying misalignments of the plurality of digital image sensor arrays based at least in part on comparison of respective positions of ones of the corresponding apparent features in each of the respective portions of visible light; calculating respective contributions of the respective portions to the combined image data structure based at least in part on the misalignments; generating a combined image data structure from the plurality of respective portions, based at least in part on the respective contributions of the respective portions to the combined image data structure.

US2014125825A1 discloses a system and method for creating a super-resolution image using an image capturing device. In one embodiment, an electronic image sensor captures a reference optical sample through an optical path. Thereafter, an optical image stabilization (OIS) processor to adjusts the optical path to the electronic image sensor by a known amount. A second optical sample is then captured along the adjusted optical path, such that the second optical sample is offset from the first optical sample by no more than a sub-pixel offset. The OIS processor may reiterate this process to capture a plurality of optical samples at a plurality of offsets. The optical samples may be combined to create a super-resolution image.

US2011226955A1 discloses imaging systems in which an undedicated optical component-i.e., a component that would be present in the system even in the absence of image stabilization-is configured to undergo corrective motion and/or other correction of image data, and thus to function as a stabilization component. The stabilization component may be a mirror and/or a lens, and a positioner may be provided to tilt, rotate, and/or otherwise precisely adjust the position and orientation of the stabilization component to improve image resolution, compensate for platform motions such as platform vibration, and/or improve image tracking. Because an undedicated optical component functions as the stabilization component, the stabilization occurs upstream, rather than downstream, from separation (if any) of the incoming image data into two or more beams. As a result, only one stabilization component is required regardless of whether the system is configured to split the image data into multiple data channels, and imaging systems as described herein therefore may be particularly well-suited for integration into a shared-aperture imaging system. In some embodiments, the coefficients of thermal expansion of selected system components-including optics, optical support structures, and/or positioners-may be substantially the same or closely matched.

An electronic gimbal with camera and mounting configuration is disclosed in US2016352992A1. The gimbal includes an inertial measurement unit which can sense the orientation of the camera and three electronic motors which can manipulate the orientation of the camera. The gimbal can be removably coupled to a variety of mount platforms, such as an aerial vehicle or a handheld grip. Moreover, a camera can be removably coupled to the gimbal and can be held in a removable camera frame. Also disclosed is a system for allowing the platform, to which the gimbal is mounted, to control settings of the camera or to trigger actions on the camera, such as taking a picture, or initiating the recording of a video. The gimbal can also provide a connection between the camera and the mount platform, such that the mount platform receives images and video content from the camera.

US2016290556A1 discloses a 360-degree gimbal device which includes an upright support, a pan motor rotatably coupled with a hollow shaft mounted on the support, a slip ring disposed in the hollow shaft, a first arm having a proximal end attached to the pan motor so that the first arm is freely rotatable 360° about a pan axis, a roll motor connected with a distal end of the first arm, a second arm having a proximal end attached to the roll motor so that the second arm is rotatable 270° about a roll axis, a tilt motor connected with a distal end of the second arm, a holder attached to the tilt motor so that the holder is rotatable ±60° about a tilt axis. The gimbal device is in wireless communication with a mobile device which has a mobile application for generating a plurality of image-shooting modes based on a plurality of customized paths.

Super-resolution is a photographing technique that enhances resolution of a camera in such a manner that the resultant image has a higher resolution than the camera sensors native resolution. For instance, it is possible to take giga-pixel image with only 10MP camera. Various techniques are used but mainly taking multiple photos with slight differences and combining and fusing these photos into one is used.

### Object of the invention

It is the object of the invention to provide a device and method for generating super resolution photos in an enhanced manner.

### Description of the invention

The before mentioned object is solved by a device according to claim 1 for generating one photo, in particularly a super resolution photo. The photo respectively photo data is generated by capturing multiple photos and merging digital photo data respectively digital photo information of the multiple captured photos. Said device comprises at least a camera means for capturing digital photos, a processor unit for analyzing the captured photos and for generating one merged photo out of multiple captured photos, a gimbal unit for holding and aligning the camera means, wherein the gimbal unit preferably comprises at least one motor for aligning the camera means. Furthermore, the processor unit provides operation data for operating the motor in dependency of the analysis of the taken photos carried out by the processor unit. The gimbal unit can also be called stabilizer gimbal grip or stabilizer or gimbal or grip, it is a device which stabilizes a camera in a fixed position even when an operator moves. This device is used according to the present embodiment to causes slight and preferably defined movements of the camera. Camera can be an action camera or any camera but most probably a smart phone with a camera.

This solution is beneficial since super resolution photos can be generated, thus even cameras with low resolution can be utilized for the generation of high resolution photos.

Further embodiment are subject-matter of the dependent claims.

According the present solution the operation data defines an operation of the motor compensating movements of the camera means with respect to at least one static object of the scenery, wherein the processor device provides capturing data for operating the camera means, wherein the camera means starts a capturing sequence in dependency of a triggering event, wherein the capturing sequence comprises at least one scenery photo of the full scenery and multiple photos with a reduced amount of features compared to the scenery photo, wherein the capturing data identifies one or more static objects and one or more moving objects in the scenery or one or more moving objects in the scenery, wherein the reduced amount of features comprises the one or more moving objects, wherein the processor unit merges at least multiple of the captured photos of the respective capturing sequence and generates a merged photo.

Thus, according to the novel technique preferably a first photo is captured and then shifted variations are captured, wherein a moving object is in the first photo at a first position and in the last photo in the last position. Photos of the moving object are taken, in particularly according to a predefined parameter, but still objects (static objects) are preferably not captured any more. The predefined parameter is preferably the time, in particularly how long photos are captured and/or how many photos are captured. The first photo and shifted variations of said first photo are preferably taken only for moving objects, then it is compiled to get one or more super resolution photo. The first photo and shifted variations of said first photo are preferably photos of a capturing sequence, wherein the capturing sequence is preferably defined by said pre-defined parameter.

The operation data defines according to a further embodiment not falling into the scope of the appended claims an operation of the motor for moving the camera means with respect to the scenery, wherein the processor device provides capturing data for operating the camera means, wherein the camera means starts a capturing sequence in dependency of a triggering event, wherein the capturing sequence comprises at least multiple photos of the scenery, wherein the camera means is arranged in different relative positions with respect to the scenery, wherein the processor unit merges at least multiple of the captured photos of the respective capturing sequence and generates a merged photo. The main idea behind super-resolution is taking several photos by very slight differences. For example, even if an operator stabilizes his/her hands and takes same scene, it is not possible that each photo is same, so if those photos are combined a higher resolution photo can be generated having a resolution higher than maximum native resolution. According to the novel technique used with respect to this embodiment a first scene is captured and the borders of that scene are determined, within these borders the camera means (camera or phone device) it slightly moved with gimbal grips stabilizer motor to differentiate, enough number of pixels to get resultant photo, for example it scans one pixel by one pixel without going out border scene.

Than phone uses super-resolution techniques know in prior-art to get resultant super-resolution image.

One photo, in particularly the first photo, of the capturing sequence defines according to an embodiment not falling into the scope of the appended claims the boarders of the captured scenery and the further photo or further photos is/are representing the scenery in one or multiple different alignments within the defined boarders.

The gimbal unit comprises according to a further preferred embodiment of the present invention multiple gimbals, in particularly more than 1 gimbal or two gimbals or more than two gimbals or three gimbals or up to three gimbals, wherein each gimbal is actuatable by a motor. This embodiment is beneficial since the gimbal unit preferably compensates operator movements or movement of a holding means and further causes, preferably pre-defined, movements of the camera means. Pre-defined movements are preferably pivoting movements, wherein photos are captured during pivoting or when the camera means is realigned in a new position. Thus, the movements can be carried out continuously or in a stepwise manner. The processor unit preferably evaluates sensor means, in particular position, acceleration and/or velocity sensor means, like inertial sensor means, and provides operation data for compensation of movements based on said sensor means. It is additionally or alternatively possible that a photo analysis is carried out and a movement of the camera means is determined based on said analysis. Thus, operation data for compensation of movements can be additionally or alternatively be provided based on such data. The senor means can be part of the gimbal unit, the camera means or a selfie stick.

The gimbal unit preferably comprises a data input port for inputting operation data provided by the processor unit, in particularly for operating the motor respectively motors. The input port is preferably part of a wireless communication unit and the processing unit comprises a further wireless communication unit, in particularly Bluetooth, wherein the operation data is transmitted wireless from the processing unit to the gimbal unit.

The camera means and the processor unit are preferably part of a communication device, in particularly a smart phone or tablet PC or action camera.

The invention further refers to a selfie stick according to claim 6.

Said selfie stick preferably comprises at least a rod with a first end and a second end, wherein the first end forms a holding part and wherein the second end comprises a device according to any of the proceeding claims. The gimbal is preferably arranged between the camera means and the rod, in particularly connecting the camera means and the rod.

The above mentioned object is also solved by a method for generating one super-resolution photo by capturing multiple photos and merging photo information of the multiple photos according to claim 7. The method comprises at least the steps: Capturing multiple photos with a camera means, analyzing the captured photos and generating one merged photo out of multiple captured photos with a processor unit, holding and aligning the camera means while capturing the photos with a gimbal unit, wherein the gimbal unit comprises at least one motor for aligning the camera means and providing operation data for operating the motor in dependency of the analysis of the taken photos carried out by the processor unit, wherein the processor unit provides the operation data.

According to the method of the present invention the operation data defines operation of the motor compensating movements of the camera means with respect to at least one static object of the scenery, wherein the processor device provides capturing data for operating the camera means, wherein the camera means starts a capturing sequence in dependency of a triggering event, wherein the capturing sequence comprises at least one scenery photo of the full scenery and multiple photos with a reduced amount of features compared to the scenery photo, wherein the capturing data identifies one or more static objects and one or more moving objects in the scenery or one or more moving objects in the scenery, wherein the reduced amount of features comprises the one or more moving objects, wherein the processor unit merges at least multiple of the captured photos of the respective capturing sequence and generates a merged photo.

The operation data defines according to an embodiment not falling into the scope of the appended claims an operation of the motor for moving the camera means with respect to the scenery, wherein the processor device provides capturing data for operating the camera means, wherein the camera means starts a capturing sequence in dependency of a triggering event, wherein the capturing sequence comprises at least multiple photos of the scenery, wherein the camera means is arranged in different relative positions with respect to the scenery, wherein the processor unit merges at least multiple of the captured photos of the respective capturing sequence and generates a merged photo.

The processor unit applies according to the present invention super resolution imaging techniques for merging the photos of a capturing sequence. Super-resolution imaging techniques are e.g. described and/or cited in article "Super-Resolution Imaging: Analysis, Algorithms, and Applications" published in EURASIP Journal on Applied Signal Processing, Volume 2006, Article ID 90531, DOI 10.1155/ASP/2006/90531.

A super resolution photo has to be understood in the context of the present invention as a generic photo generated by merging data representing multiple photos. Thus, the super resolution photo has preferably a resolution which is higher than the maximum resolution of a photo captured with the same camera. According to a further feature of the present invention the pixel density respectively the amount of pixels differs in different sections of the super resolution photo, in particular in one section more than 2 or 3 or 4 or 10 times the amount of pixels compared with another section, wherein both sections have the same size.

Further benefits, goals and features of the present invention will be described by the following specification of the attached figures, in which exemplarily components of the invention are illustrated. Components of the device and methods according to the invention, which match at least essentially with respect to their function can be marked with the same reference sign, wherein such components do not have to be marked or described multiple times with respect to said figures. In the following the invention is just exemplarily described with respect to the attached figures.

### Brief Description of the Drawing

Fig. 1 shows a first schematic illustration of a first embodiment of the present invention and
Fig. 2 shows a second schematic illustration of a further embodiment not falling into the scope of the claims but useful for understanding the invention

### Detailed Description of the Drawing

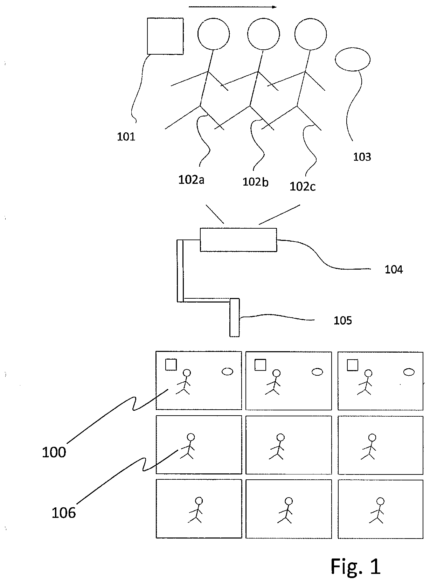

Fig. 1 shows a situation in which a person 102 is moving in a scenery. The objects 101 and 103 are static. Reference number 102a-102c represent different positions of the moving object respectively person in the scenery.

A camera means 104 is attached to a gimbal unit 105 for capturing the multiple phots of the scenery.

A processing unit preferably provides operation data that defines operation of 'the gimbal unit for compensating movements of the camera means 104 with respect to at least one static object 101, 103 of the scenery. The gimbal unit 105 is preferably part of a selfie stick and held by an operator respectively a person. The camera means 104 carries out a capturing sequence in dependency of a triggering event. The capturing sequence comprises at least one scenery photo of the full scenery and multiple photos with a reduced amount of features compared to the scenery photo, wherein the capturing data identifies one or more static objects 101, 103 and/or one or more moving objects 102 in the scenery. The reduced amount of features comprises only the one or more moving objects 102a-102b. The processor unit, in particularly of a smartphone, merges at least multiple of the captured photos of the respective capturing sequence and generates a merged photo. The camera means 104 is preferably part of a smartphone or tablet PC. Reference number 106 identifies multiple pictures captured during the capturing sequence. One picture or multiple pictures are capturing the full scenery, wherein further pictures preferably are only capturing image information with respect to a moving object. More reduced photos (just capturing the moving object) then photos of the full scenery are captured. Preferably more than 5 or more than 50 or more than 100 or more than 500 photos are captured and merged to one super resolution photo.

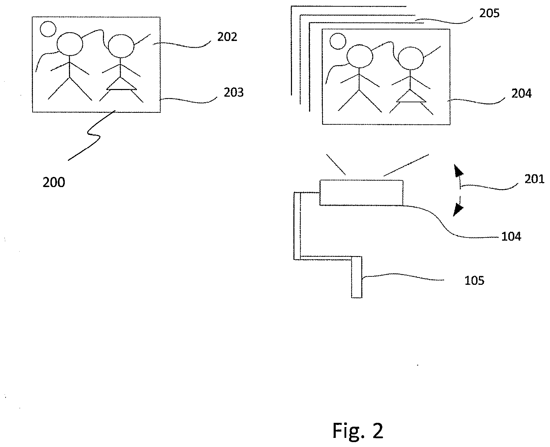

Fig. 2 shows a first photo 200 of a scenery 202. This photo 200 defines boarders 203 of the scene. The device according to the invention is used to capture multiple photos of said scene 202, wherein the alignment of the camera means 104 is slightly changed after a predefined number of photos, in particularly after one or two photos. Slightly changed hereby preferably defines changes between preferably 0,0001° and 5°, in particularly between 0,001° and 0,1°. According to the invention a pivoting of the camera means 104 can be carried out in stepwise or continuous manner, wherein photos can be captured also in a stepwise or continuous manner. Content of said further photos 205 is preferably limited to the boarders 203 defined at the start of the capturing sequence. Pivoting movements of the camera means 104 can take place around multiple axes, in particularly at the same time or one after another.

Thus, operation data provided by a processor unit defines operation of the motor for moving the camera means 104 with respect to the scenery 202. The camera means 104 starts a capturing sequence in dependency of a triggering event, wherein the capturing sequence comprises at least multiple photos of the scenery. The processor unit merges at least multiple of the captured photos of the respective capturing sequence and generates a merged photo. Preferably more than 5 or more than 50 or more than 100 or more than 500 further photos 205 are captured and merged to one super resolution photo.

### List of reference numbers

- 101: Static object
- 102: Moving object
- 103: Other static object
- 104: Smart phone with camera or any other camera
- 105: Stabilizer / Gimbal / Grip
- 106: photos
- 200: first photo
- 201: Very slight movements but stabilizing at center
- 202: Original scene
- 203: Border that only photographing done
- 204: Original scene and borders are taken first
- 205: Multiple, in particular hundreds of photographs taken with in the border but with slight differences and combined to one

## Claims

1. Device for generating one super-resolution photo by capturing multiple photos and
merging photo information of the multiple photos,
at least comprising
a camera means (104) for capturing photos,
a processor unit for analyzing the captured photos and for generating one merged photo out of multiple captured photos (106, 200, 205), the processor unit applies super resolution imaging for merging the photos of a capturing sequence,
a gimbal unit (105) for holding and aligning the camera means (104),
wherein the gimbal unit (105) comprises at least one motor for aligning the camera means (104),
wherein operation data provided by said processor unit defines operation of the motor compensating movements of the camera means (104) with respect to at least one static object of the scenery,
**characterized in that**
the processor device provides capturing data for operating the camera means, wherein the camera means starts a capturing sequence in dependency of a triggering event, wherein the capturing sequence comprises at least one scenery photo of the full scenery and multiple photos with a reduced amount of features compared to the scenery photo, wherein the capturing data identifies either one or more static objects (101,103) and one or more moving objects in the scenery, or one or more moving objects in the scenery,
wherein the reduced amount of features comprises the one or more moving objects (102), wherein the processor unit merges at least multiple of the captured photos of the respective capturing sequence and generates a merged photo.

2. Device according to claim 1,
**characterized in that**
the gimbal unit (105) comprises multiple gimbals, in particularly up to three, wherein each gimbal is actuatable by a motor.

3. Device according to any of the proceeding claims,
**characterized in that**
the gimbal unit (105) comprises a data input port for inputting operation data provided by the processor unit.

4. Device according to claim 3,
**characterized in that**
the input port is part of a wireless communication unit and the processing unit comprises a further wireless communication unit, wherein the operation data is transmitted wireless from the processing unit to the gimbal unit (105).

5. Device according to any of the proceeding claims,
**characterized in that**
the camera means (104) and the processor unit are part of a communication device, in particularly a smart phone.

6. Selfie stick,
at least comprising
a rod with a first end and a second end,
wherein the first end forms a holding part and wherein the second end comprises a device according to any of the proceeding claims.

7. Method for generating one super-resolution photo by capturing multiple photos and
merging photo information of the multiple photos,
at least comprising the steps
capturing multiple photos with a camera means (104),
analyzing the captured photos (106, 200, 205) and generating one merged photo out of multiple captured photos with a processor unit,
holding and aligning the camera means (104) while capturing the photos with a gimbal unit (105),
wherein the gimbal unit (105) comprises at least one motor for aligning the camera means (104)
wherein the operation data defines operation of the motor compensating movements of the camera means (104) with respect to at least one static object of the scenery,
wherein the processor device provides capturing data for operating the camera means (104), the processor unit applies super resolution imaging for merging the photos of a capturing sequence,
wherein the camera means (104) starts a capturing sequence in dependency of a triggering event,
**characterized in that**
the capturing sequence comprises at least one scenery photo (100) of the full scenery and multiple photos (106) with a reduced amount of features compared to the scenery photo, wherein the capturing data identifies either one or more static objects (101,103) and one or more moving objects in the scenery, or one or more moving objects in the scenery,
wherein the reduced amount of features comprises the one or more moving objects (102), and wherein the processor unit merges at least multiple of the captured photos of the respective capturing sequence and generates a merged photo.

8. Method according to claim 7,
**characterized by** the step
providing operation data for operating the motor in dependency of the analysis of the taken photos carried out by the processor unit, wherein the processor unit provides the operation data.

## Patentansprüche

1. Vorrichtung zum Erzeugen eines superauflösenden Fotos durch Aufnehmen mehrerer Fotos und Zusammenführen der Fotoinformationen der mehreren Fotos,
die mindestens aufweist
eine Kameraeinrichtung (104) zum Aufnehmen von Fotos,
eine Prozessoreinheit zum Analysieren der aufgenommenen Fotos und zum Erzeugen eines zusammengesetzten Fotos aus mehreren aufgenommenen Fotos (106, 200, 205), wobei die Prozessoreinheit eine superauflösende Bildgebung zum Zusammensetzen der Fotos einer Aufnahmesequenz anwendet,
eine kardanische Einheit (105) zum Halten und Ausrichten der Kameraeinrichtung (104),
wobei die kardanische Einheit (105) mindestens einen Motor zum Ausrichten der Kameraeinrichtung (104) aufweist,
wobei von der Prozessoreinheit vorgesehene Betriebsdaten den Betrieb des Motors zur Kompensation von Bewegungen der Kameraeinrichtung (104) in Bezug auf mindestens ein statisches Objekt der Szenerie definieren,
**dadurch gekennzeichnet, dass**
die Prozessorvorrichtung Aufnahmedaten zum Betreiben der Kameraeinrichtung vorsieht, wobei die Kameraeinrichtung eine Aufnahmesequenz in Abhängigkeit von einem Auslöseereignis startet, wobei die Aufnahmesequenz mindestens ein Szenenfoto der vollständigen Szenerie und mehrere Fotos mit einer reduzierten Anzahl von Merkmalen im Vergleich zu dem Szenenfoto aufweist, wobei die Aufnahmedaten entweder ein oder mehrere statische Objekte (101, 103) und ein oder mehrere sich bewegende Objekte in der Szenerie oder ein oder mehrere sich bewegende Objekte in der Szenerie identifizieren, wobei die reduzierte Anzahl von Merkmalen das eine oder die mehreren sich bewegenden Objekte (102) aufweist, wobei die Prozessoreinheit zumindest mehrere der aufgenommenen Fotos der jeweiligen Aufnahmesequenz zusammenführt und ein zusammengeführtes Foto erzeugt.

2. Vorrichtung gemäß Anspruch 1,
**dadurch gekennzeichnet, dass**
die Kardaneinheit (105) mehrere, insbesondere bis zu drei, kardanische Aufhängungen aufweist, wobei jede kardanische Aufhängung durch einen Motor betätigbar ist.

3. Vorrichtung gemäß einem der vorangehenden Ansprüche,
**dadurch gekennzeichnet, dass**
die kardanische Einheit (105) einen Dateneingangsanschluss zur Eingabe von durch die Prozessoreinheit vorgesehenen Betriebsdaten aufweist.

4. Vorrichtung gemäß Anspruch 3,
**dadurch gekennzeichnet, dass**
der Eingabeanschluss Teil einer drahtlosen Kommunikationseinheit ist und die Verarbeitungseinheit eine weitere drahtlose Kommunikationseinheit aufweist, wobei die Betriebsdaten drahtlos von der Verarbeitungseinheit an die kardanische Einheit (105) übertragen werden.

5. Vorrichtung gemäß einem der vorangehenden Ansprüche,
**dadurch gekennzeichnet, dass**
die Kameraeinrichtung (104) und die Prozessoreinheit Teil einer Kommunikationsvorrichtung, insbesondere eines Smartphones, sind.

6. Selfie-Stick,
der zumindest aufweist
eine Stange mit einem ersten Ende und einem zweiten Ende,
wobei das erste Ende ein Halteteil bildet und wobei das zweite Ende eine Vorrichtung gemäß einem der vorangehenden Ansprüche aufweist.

7. Verfahren zum Erzeugen eines superaufgelösten Fotos durch Aufnehmen mehrerer Fotos und Zusammenführen von Fotoinformationen der mehreren Fotos,
das zumindest die Schritte aufweist
Aufnehmen mehrerer Fotos mit einer Kameraeinrichtung (104),
Analysieren der aufgenommenen Fotos (106, 200, 205) und Erzeugen eines zusammengesetzten Fotos aus mehreren aufgenommenen Fotos mit einer Prozessoreinheit,
Halten und Ausrichten der Kameraeinrichtung (104) während des Aufnehmens der Fotos mit einer kardanischen Einheit (105),
wobei die kardanische Einheit (105) mindestens einen Motor zum Ausrichten der Kameraeinrichtung (104) aufweist
wobei die Betriebsdaten den Betrieb des Motors zur Kompensation von Bewegungen der Kameraeinrichtung (104) in Bezug auf mindestens ein statisches Objekt der Szenerie definieren,
wobei die Prozessoreinheit Aufnahmedaten für den Betrieb der Kameraeinrichtung (104) vorsieht, wobei die Prozessoreinheit eine superauflösende Bildgebung zum Zusammenfügen der Fotos einer Aufnahmesequenz anwendet,
wobei die Kameraeinrichtung (104) in Abhängigkeit von einem Auslöseereignis eine Aufnahmesequenz startet,
**dadurch gekennzeichnet, dass**
die Aufnahmesequenz mindestens ein Szenenfoto (100) der vollständigen Szenerie und mehrere Fotos (106) mit einer reduzierten Anzahl von Merkmalen im Vergleich zu dem Szenenfoto umfasst,
wobei die Aufnahmedaten entweder ein oder mehrere statische Objekte (101, 103) und ein oder mehrere bewegliche Objekte in der Szenerie oder ein oder mehrere bewegliche Objekte in der Szenerie identifizieren,
wobei die reduzierte Menge an Merkmalen das eine oder die mehreren bewegten Objekte (102) aufweist,
und wobei die Prozessoreinheit zumindest mehrere der aufgenommenen Fotos der jeweiligen Aufnahmesequenz zusammenführt und ein zusammengeführtes Foto erzeugt.

8. Verfahren gemäß Anspruch 7,
**gekennzeichnet durch** den Schritt
Bereitstellen von Betriebsdaten zum Betreiben des Motors in Abhängigkeit von der durch die Prozessoreinheit durchgeführten Analyse der aufgenommenen Fotos, wobei die Prozessoreinheit die Betriebsdaten vorsieht.

## Revendications

1. Dispositif pour générer une photo de super-résolution en capturant plusieurs photos et en fusionnant les informations des multiples photos,
comprenant au moins
un appareil photo (104) pour capturer des photos,
une unité de traitement pour analyser les photos capturées et pour générer une photo fusionnée à partir de plusieurs photos capturées (106, 200, 205), l'unité de traitement applique l'imagerie de super résolution pour fusionner les photos d'une séquence de capture,
une unité à cardan (105) pour maintenir et aligner l'appareil photo (104),
dans laquelle l'unité à cardan (105) comprend au moins un moteur pour aligner le moyen de prise de vue (104),
dans lequel les données de fonctionnement fournies par ladite unité de traitement définissent le fonctionnement du moteur compensant les mouvements du moyen de caméra (104) par rapport à au moins un objet statique du décor,
**caractérisé par le fait que**
l'unité de traitement fournit des données de capture pour faire fonctionner le moyen de caméra, dans lequel le moyen de caméra démarre une séquence de capture en fonction d'un événement déclencheur, dans lequel la séquence de capture comprend au moins une photo du paysage complet et plusieurs photos avec un nombre réduit de caractéristiques par rapport à la photo du paysage, Les données de capture identifient soit un ou plusieurs objets statiques (101, 103) et un ou plusieurs objets mobiles dans le paysage, soit un ou plusieurs objets mobiles dans le paysage, la quantité réduite de caractéristiques comprenant un ou plusieurs objets mobiles (102), l'unité de traitement fusionnant au moins plusieurs des photos capturées de la séquence de capture respective et générant une photo fusionnée.

2. Dispositif selon la revendication 1,
**caractérisé par le fait que**
l'unité de cardan (105) comprend plusieurs cardans, en particulier jusqu'à trois, chaque cardan étant actionnable par un moteur.

3. Dispositif selon l'une quelconque des revendications précédentes,
**caractérisé par le fait que**
l'unité de cardan (105) comprend un port d'entrée de données pour l'entrée des données de fonctionnement fournies par l'unité de traitement.

4. Dispositif selon la revendication 3,
**caractérisé en ce que**
le port d'entrée fait partie d'une unité de communication sans fil et l'unité de traitement comprend une autre unité de communication sans fil, dans laquelle les données de fonctionnement sont transmises sans fil de l'unité de traitement à l'unité à cardan (105).

5. Dispositif selon l'une quelconque des revendications précédentes,
**caractérisé par le fait que**
les moyens de caméra (104) et l'unité de traitement font partie d'un dispositif de communication, en particulier un téléphone intelligent.

6. Bâton de selfie,
comprenant au moins
une tige avec une première extrémité et une deuxième extrémité,
dans lequel la première extrémité forme une partie de maintien et dans lequel la deuxième extrémité comprend un dispositif selon l'une quelconque des revendications précédentes.

7. Méthode pour générer une photo de super-résolution en capturant plusieurs photos et en fusionnant les informations des photos multiples,
comprenant au moins les étapes suivantes
capture de plusieurs photos à l'aide d'un appareil photo (104),
analyse des photos capturées (106, 200, 205) et génération d'une photo fusionnée à partir de plusieurs photos capturées à l'aide d'une unité de traitement,
maintenir et aligner l'appareil photo (104) tout en capturant les photos à l'aide d'une unité à cardan (105),
l'unité à cardan (105) comprend au moins un moteur pour aligner l'appareil photo (104)
dans lequel les données de fonctionnement définissent le fonctionnement du moteur compensant les mouvements des moyens de prise de vue (104) par rapport à au moins un objet statique du paysage,
dans lequel le dispositif de traitement fournit des données de capture pour le fonctionnement du moyen de prise de vue (104), l'unité de traitement applique l'imagerie à super résolution pour fusionner les photos d'une séquence de capture,
l'appareil photo (104) démarre une séquence de capture en fonction d'un événement déclencheur,
**caractérisé par le fait que**
la séquence de capture comprend au moins une photo de paysage (100) du paysage complet et plusieurs photos (106) avec un nombre réduit de caractéristiques par rapport à la photo de paysage,
les données de capture identifient soit un ou plusieurs objets statiques (101, 103) et un ou plusieurs objets en mouvement dans le décor, soit un ou plusieurs objets en mouvement dans le décor,
dans laquelle la quantité réduite de caractéristiques comprend un ou plusieurs objets mobiles (102),
et dans lequel l'unité de traitement fusionne au moins plusieurs des photos capturées de la séquence de capture respective et génère une photo fusionnée.

8. Méthode selon la revendication 7,
**caractérisé par** l'étape
fournir des données d'opération pour faire fonctionner le moteur en fonction de l'analyse des photos prises effectuée par l'unité de traitement, l'unité de traitement fournissant les données d'opération.
